Europäisches Patentamt

European Patent Office

Office européen des brevets

(11) Veröffentlichungsnummer: **0 165 417**
**B1**

# (12) EUROPÄISCHE PATENTSCHRIFT

(45) Veröffentlichungstag der Patentschrift:
**30.03.88**

(51) Int. Cl.⁴: **F 16 J 9/20**

(21) Anmeldenummer: **85105314.0**

(22) Anmeldetag: **02.05.85**

(54) **Kolbenring.**

(30) Priorität: **23.05.84 DE 3419241**

(43) Veröffentlichungstag der Anmeldung:
**27.12.85 Patentblatt 85/52**

(45) Bekanntmachung des Hinweises auf die Patenterteilung:
**30.03.88 Patentblatt 88/13**

(84) Benannte Vertragsstaaten:
**DE FR GB IT**

(56) Entgegenhaltungen:
**DE - A - 1 944 950**
**DE - A - 3 305 873**
**US - A - 3 031 240**

**PATENTS ABSTRACTS OF JAPAN, Band 8, Nr. 201**
**(M-325) [1638], 14 September 1984; & JP - A - 59 89 865**
**(ISAO MATSUI) 24-05-1984**

(73) Patentinhaber: **GOETZE AG,**
**Bürgermeister-Schmidt-Strasse 17,**
**D-5093 Burscheid 1 (DE)**

(72) Erfinder: **Dück, Gerhard, Dipl.-Ing., Füllsichel 12,**
**D-5093 Burscheid (DE)**
Erfinder: **Brillert, Hans-Rainer, Rotdornallee 4,**
**D-5093 Burscheid (DE)**
Erfinder: **Mierbach, Albin, Burscheider Strasse 308,**
**D-5090 Leverkusen 3 (DE)**
Erfinder: **Schmelter, Wolfgang, Am Sportplatz 7 c,**
**D-5090 Leverkusen 3 (DE)**

### Beschreibung

Die Erfindung betrifft einen Kolbenring, der insbesondere im Einbauzustand einen tellerfederförmigen Querschnitt aufweist und unter axialer Spannung mit seinen Flanken an den gegenüberliegenden Seitenwänden einer Ringnut eines Kolbens anliegt.

Durch die DE-A-3 305 873 ist bereits ein Kolbenring der angesprochenen Gattung bekannt. Dieser soll sich im Bereich seines äusseren Umfanges an der brennraumseitigen Seitenwand und im Bereich seines inneren Umfanges an der ölraumseitigen Seitenwand der ihn aufnehmenden Ringnut anlegen. Der angesprochene Kolbenring liegt mit Linienberührung sowohl im Bereich der Seitenwände als auch im Nutgrund und an der Zylinderwand an und ist somit weder in axialer noch in radialer Richtung bewegungsfähig. Da die axiale Höhe des rechteckigen Ausgangsringes wesentlich kleiner ist als die ihn aufnehmende Nut kann davon ausgegangen werden, dass die axiale Spannung im wesentlichen durch Vertwisten des Ringes beim Spannen in Umfangsrichtung erzeugt wird. Dies geschieht analog zu den bekannten Reversed-Torsion-Ringen. Infolge der bereits angesprochenen linienförmigen Berührung zwischen Kolbenring und Ringnut stellt sich im motorischen Betrieb ein hoher Verschleiss sowohl am Ring als auch in den korrespondierenden Bereichen der Nut ein.

Um dieses Problem in den Griff zu bekommen, wurde in der JP-C-51-136 063 ein ebenfalls dem gattungsbildenden Teil entsprechender Kolbenring vorgeschlagen, der zumindest in seinen mit den Seitenwänden der Ringnut zusammenwirkenden Bereichen verschleissfester ausgebildet ist. Damit kann zwar ringseitig das Verschleissproblem gelöst werden, nutseitig bleibt es jedoch erhalten, vielmehr besteht hier sogar die Gefahr, dass sich die härteren Bereiche des Kolbenringes noch schneller in die Seitenwände der Ringnut eingraben.

Ausgehend von diesem Stand der Technik, ist die der Erfindung zugrundeliegende Aufgabe darin zu sehen, einen Kolbenring mit tellerfederförmigem Querschnitt dahingehend weiterzubilden, dass der Verschleiss zwischen dem Kolbenring und den Seitenwänden der Ringnut bei gleichzeitig gutem Abdichtverhalten und Erhöhung der Lebensdauer weitestgehend unterbunden wird.

Die Lösung dieser Aufgabe ist darin zu sehen, dass die an den Seitenwänden der Ringnut anliegenden Flächenbereiche des Ringes mit parallel oder annähernd parallel zu den Seitenwänden verlaufenden Abflachungen versehen sind. Durch diese Massnahme ist sichergestellt, dass der sich im motorischen Betrieb einstellende Verschleiss in den miteinander zusammenwirkenden Flächenbereichen zwischen Kolbenring und Ringnut erheblich reduziert wird.

Reversed-Torsion-Ringe, wie sie z.B. durch die US-A-2 798 779 bekannt sind, werden so ausgelegt, dass sie durch Eigenvertwistung in der Ringnut klemmen. Die Eigenvertwistung ist jedoch über den gesamten Umfang nicht gleichmässig, sondern fällt vom Ringrücken zu den Stossenden hin ab. Im motorischen Betrieb kann es nun vorkommen, dass ein solcher Ring durch unterschiedliche Massen- und Gasdruckkräfte im Bereich des Ringrückens axial noch gespannt ist, die Stossenden jedoch zu flattern beginnen und sich partiell in den Kolben eingraben. Dies ist bedingt einmal durch die Kontur der Ringe selber und zum anderen durch das axiale Klemmen in der Nut, so dass er sich nicht drehen kann.

Demgegenüber liegt der tellerfederförmige Kolbenring über seinen gesamten Umfang gleichmässig an den Seitenwänden an, so dass ein Flattern der Stossenden ausgeschlossen ist. Gegebenenfalls partielles Eingraben in den Kolben bei Gasdruck- und Massenkräften (z.B. im Leerlauf des Motors), die nicht in der Lage sind, den Ring an die untere Nutflanke anzudrücken und somit die Drehbewegung in Umfangsrichtung zu ermöglichen, wird durch den erfindungsgemässen Vorschlag ebenfalls unterbunden.

Einem weiteren Gedanken der Erfindung gemäss, ist die axiale Höhe des Kolbenringes, gemessen im Bereich seiner im wesentlichen parallel verlaufenden Abflachungen, im nicht eingebauten Zustand grösser als die axiale Höhe der zugehörigen Ringnut. Um einen im Querschnitt tellerfederförmigen Kolbenring herzustellen, wird üblicherweise ein Rechteckring eingesetzt, der durch thermisches Spannen in seine neue Form gebracht wird. Nachteile, die sich hier einstellen können, sind im wesentlichen darin zu sehen, dass der Ring nicht über seinen gesamten Umfang gleichmässig an den Seitenwänden der Nut anliegt. Demgegenüber wird die axiale Spannung des vorgeschlagenen, im Ausgangszustand ebenfalls rechteckigen Kolbenringes dadurch erzielt, dass er so bearbeitet wird, dass bei der Montage der Kolbenring axial (plan) zusammengedrückt und so in die Ringnut eingebracht wird. Bei Aufhebung dieses Zustandes legt er sich automatisch infolge seiner Kontur im Bereich der Abflachungen an den korrespondierenden Seitenwänden der Ringnut an.

Kolbenringe der angesprochenen Gattung sind derart im Kolben verbaut, dass sie radial aussen (Lauffläche) brennraumseitig und radial innen ölraumseitig an den Seitenwänden der Ringnut anliegen. Üblicherweise werden derartige Ringe entweder als Ölabstreifring oder aber als zweiter Ring am Kolben eingesetzt, dem jedoch auch noch ölabstreifende Wirkung zukommt. Beim Stand der Technik kann das Öl in den ölraumseitig gebildeten Spalt zwischen der unteren Seitenwand und der unteren Ringflanke infolge der kontinuierlichen axialen Bewegung des Kolbenringes radial nach innen gepumpt werden und so in den Bereich zwischen dem ersten und zweiten Kolbenring eindringen. Um dies nun zu vermeiden, wird vorgeschlagen, dass der radial innere abgeflachte Bereich brennraumseitig und der radial äussere abgeflachte Bereich ölraumseitig angeordnet sind. Diese umgekehrte Bauweise verhindert das Eindringen von Öl in den Bereich der Ringnut, da keine Spalte mehr gegeben sind.

Einem weiteren Gedanken der Erfindung gemäss, ist die radiale Breite der Abflachungen kleiner als die halbe radiale Wandstärke des Kolbenringes ausgebildet, sie liegt vorzugsweise jedoch im Bereich zwischen 0,1 und 1 mm.

Ferner wird vorgeschlagen, zum einen die Lauffläche des Kolbenringes so auszubilden, dass sie sich zum Brennraum hin, ausgehend von der radial äusseren Abflachung, minutenförmig verjüngt. Zum anderen soll die innere Umfangsfläche parallel zur Kolbenachse verlaufen. Somit wird ein ungleichmässiger Ringquerschnitt erzielt, der einerseits bewirkt, dass eine relativ scharfe Kratzkante gebildet wird und andererseits die axiale Spannung der Ringe durch unsymmetrische Krafteinleitung im Bereich der Lauffläche gegebenenfalls noch erhöht werden kann.

Des weiteren besteht die Möglichkeit, ausgehend von der jeweiligen Abflachung, die in Richtung der jeweils gegenüberliegenden Umfangsfläche des Kolbenringes unter einem Winkel sich erstreckenden Flächenbereiche so auszubilden, dass sie im wesentlichen parallel zueinander verlaufen. Je nach Einsatzgebiet können sich diese Verhältnisse natürlich auch ändern. Bevorzugte Winkel sollen im Bereich zwischen 1 und 10° liegen.

Ferner wird ein Verfahren zur Herstellung des vorgeschlagenen Kolbenringes offenbart, das darin besteht, dass ein im Ausgangszustand rechteckiger Kolbenring z.B. durch thermisches Spannen in Parallelogrammform gebracht wird und die einander diagonal gegenüberliegenden Endbereiche, Abflachungen bildend, nachgearbeitet werden. Ein derartiger Kolbenring könnte dann ähnlich wie ein Reversed-Torsion-Ring in der Nut vertwisten.

Alternativ dazu wird vorgeschlagen, die Flanken eines im Querschnitt rechteckigen Kolbenringes dergestalt nachzuarbeiten, dass einander diagonal gegenüberliegende Abflachungen stehenbleiben. Dies geschieht in der Form, dass die dem Brennraum zugewandte Flanke, ausgehend von der Lauffläche, und die dem Ölraum zugewandet Flanke, ausgehend von der inneren Umfangsfläche, vorzugsweise durch Schleifen derart bearbeitet werden, dass ein Kolbenring in Parallelogrammform entsteht. Der Anpressdruck des Kolbenringes an den Seitenwänden der Ringnut lässt sich durch Wahl der zu schleifenden Parallelogrammwinkel in weiten Grenzen beliebig einstellen, wobei sowohl die axiale Höhe der jeweiligen Ringnut als auch die axiale Höhe des Kolbenringes bei der Auslegung mit zu berücksichtigen sind.

Die Erfindung ist in der Zeichnung dargestellt und wird im folgenden näher beschrieben. Es zeigen:

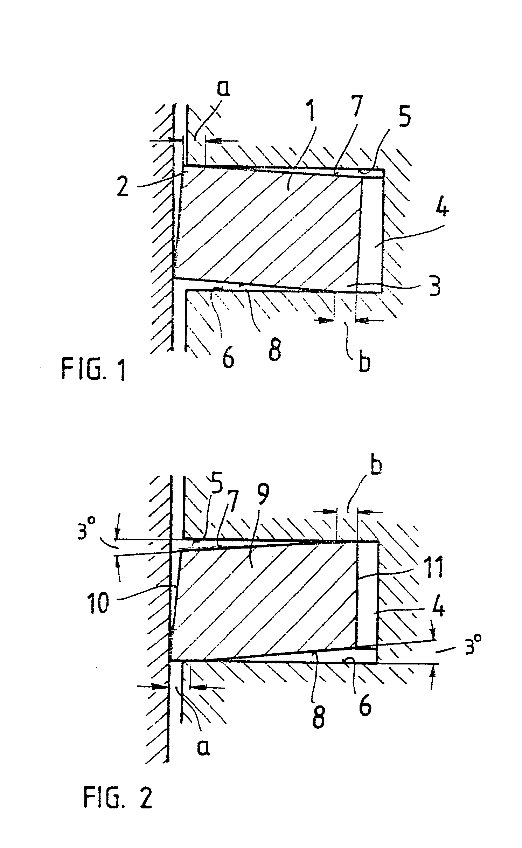

Fig. 1 und 2 einen tellerfederförmigen Kolbenring in unterschiedlichen Einbausituationen.

Die in den beiden Figuren dargestellten Kolbenringe bzw. deren Konturen sind zum besseren Verständnis stark vergrössert.

Fig. 1 zeigt einen Kolbenring 1, der von seinem Querschnitt her etwa dem in der JP-C-51-136 063 dargestellten entspricht. Ein Rechteckring wird im nicht eingebauten Zustand thermisch derart verspannt, dass er anschliessend ein symmetrisches tellerfederförmiges Profil aufweist, wobei seine axiale Höhe, gemessen über die diagonal gegenüberliegenden Eckbereiche 2, 3, etwa der axialen Höhe der Ringnut 4 entspricht. Diese weist einen rechteckigen Querschnitt mit parallel zueinander verlaufenden Seitenwänden 5, 6 auf. Wird der Kolbenring 1 in die Nut 4 gesetzt und in Umfangsrichtung gespannt, vertwistet er und erzeugt so eine axiale Spannung. Um nun Verschleiss in den Anlagebereichen zwischen dem Kolbenring 1 und den Seitenwänden 5, 6 im motorischen Betrieb zu unterbinden, werden die Flanken 7, 8 z.B. durch Schleifen nachgearbeitet. Es entstehen parallel zu den Seitenwänden 5, 6 verlaufende Abflachungen a, b, deren radiale Abmessungen kleiner als die halbe radiale Wandstärke sind. Der Kolbenring 1 ist nun dergestalt in der Ringnut 4 eingesetzt, dass die radiale äussere Abflachung a brennraumseitig und die radial innere Abflachung b ölraumseitig mit der zugehörigen Seitenwand 5 und 6 zusammenwirkt.

Fig. 2 zeigt einen Kolbenring 9, der zwar auch ein tellerfederförmiges Profil, jedoch mit unsymmetrischem Querschnitt aufweist. Der Kolbenring 9 wird dergestalt hergestellt, dass an seinem Rechteckring mit definiertem Winkel, z.B. 3°, im Bereich seiner Flanken 7, 8 parallele Flächen geschliffen werden. Dadurch entsteht ein Kolbenring 9 in Parallelogrammform. Im Bereich der Lauffläche 10 wird weiterhin eine Minute angeschliffen. Die innere Umfangsfläche 11 wird nicht weiter bearbeitet. Die Flanken 7, 8 werden jedoch nicht über die gesamte radiale Wandstärke abgeschliffen, sondern nur so weit, dass Abflachungen a, b mit definierten Abmessungen (z.B. 2 mm) stehenbleiben, wobei diese Bereiche a, b dem ursprünglichen Querschnitt entsprechen. In diesem Zustand ist die axiale Höhe des Kolbenringes 9 geringfügig grösser als die axiale Höhe der Ringnut 4, gemessen über die diagonal gegenüberliegenden Abflachungen a,b. Der Kolbenring 9 wird nun so in die Ringnut eingebracht, dass er axial verspannt wird. Bedingt durch die Parallelogrammform, reduziert sich dabei seine axiale Höhe, und er kann dann in die Ringnut 4 eingesetzt werden. Im entspannten Zustand legen sich die abgeflachten Bereiche a, b an den korrespondierenden Seitenwänden 5, 6 der Ringnut 4 unter axialer Spannung an.

Im Gegensatz zu Fig. 1 ist hier die radial äussere Abflachung a ölraumseitig und die radial innere Abflachung b brennraumseitig angeordnet.

## Patentansprüche

1. Kolbenring, der insbesondere im Einbauzustand einen tellerfederförmigen Querschnitt aufweist und unter axialer Spannung mit seinen Flanken (7, 8) an den gegenüberliegenden Seitenwänden (5, 6) einer Ringnut eines Kolbens anliegt, dadurch gekennzeichnet, dass die an den Seitenwänden (5, 6) der Ringnut (4) anliegenden Flankenbereiche des Ringes (1, 9) mit parallel oder annähernd parallel zu den Seitenwänden (5, 6) der Ringnut (4) verlaufenden Abflachungen (a, b) versehen sind.

2. Kolbenring nach Anspruch 1, dadurch gekennzeichnet, dass die axiale Höhe des Kolbenringes (9), gemessen im Bereich der Abflachungen (a, b), im nicht eingebauten Zustand grösser ist als die axiale Höhe der zugehörigen Ringnut (4).

3. Kolbenring nach den Ansprüchen 1 und 2, dadurch gekennzeichnet, dass die radial innere Abflachung (b) brennraumseitig und die radial äussere Abflachung (a) ölraumseitig angeordnet sind.

4. Kolbenring nach den Ansprüchen 1 bis 3, dadurch gekennzeichnet, dass die radiale Breite der Abflachungen (a, b) kleiner als die halbe radiale Wandstärke des Kolbenringes (1, 9) ausgebildet ist.

5. Kolbenring nach den Ansprüchen 1 bis 4, dadurch gekennzeichnet, dass die radiale Erstreckung der Abflachungen (a, b) zwischen 0,1 und 1 mm liegt.

6. Kolbenring nach den Ansprüchen 1 bis 5, dadurch gekennzeichnet, dass sich die Lauffläche (10) des Kolbenringes (9), ausgehend von der radial äusseren Abflachung (a), minutenförmig verjüngt.

7. Kolbenring nach den Ansprüchen 1 bis 6, dadurch gekennzeichnet, dass die innere Umfangsfläche (11) des Kolbenringes (9), ausgehend von der radial inneren Abflachung (b), parallel zur Kolbenachse verläuft.

8. Kolbenring nach den Ansprüchen 1 bis 7, dadurch gekennzeichnet, dass die, ausgehend von der jeweiligen Abflachung (a oder b), in Richtung der jeweils gegenüberliegenden Umfangsfläche (10 oder 11) des Kolbenringes (9) unter einem Winkel sich erstreckenden Flächenbereiche (7, 8) im wesentlichen parallel zueinander verlaufen.

9. Kolbenring nach den Ansprüchen 1 bis 8, dadurch gekennzeichnet, dass der Winkel im Bereich zwischen 1 und 10° liegt.

10. Verfahren zur Herstellung eines Kolbenringes mit insbesondere im Einbauzustand tellerfederförmigem Querschnitt nach den Ansprüchen 1 bis 9, dadurch gekennzeichnet, dass ein im Ausgangszustand rechteckiger Kolbenring in tellerfederförmige Gestalt insbesondere durch thermisches Spannen gebracht wird und die einander diagonal gegenüberliegenden Eckbereiche des Kolbenringes, Abflachungen bildend, nachgearbeitet werden.

11. Verfahren zur Herstellung eines Kolbenringes mit im Einbauzustand tellerfederförmigem Querschnitt nach den Ansprüchen 1 bis 9, dadurch gekennzeichnet, dass die Flanken eines im Querschnitt rechteckigen Kolbenringes derart nachgearbeitet werden, dass einander diagonal gegenüberliegende Abflachungen stehenbleiben.

12. Verfahren nach Anspruch 11, dadurch gekennzeichnet, dass die dem Brennraum zugewandte Flanke, ausgehend von der Lauffläche, und die dem Ölraum zugewandte Flanke, ausgehend von der inneren Umfangsfläche, unter einem Winkel nachgearbeitet werden.

13. Verfahren nach den Ansprüchen 10 bis 12, dadurch gekennzeichnet, dass die zu bearbeitenden Flanken abgeschliffen werden.

**Claims**

1. Piston ring which has in particular in the installed state a dished spring form cross section and bears under axial stress with its flanks (7, 8) against the opposite side walls (5, 6) of an annular groove of a piston, characterised in that the flank regions of the ring (1, 9) bearing on the side walls (5, 6) of the annular groove (4) are provided with flats (a, b) extending parallel or approximately parallel to the side walls (5, 6) of the annular groove (4).

2. Piston ring according to claim 1, characterised in that the axial height of the piston ring (9) measured in the region of the flats (a, b), is greater in the uninstalled state than the axial height of the corresponding annular groove (4).

3. Piston ring according to claims 1 and 2, characterised in that the radially inner flat (b) is arranged on the combustion chamber side and the radially outer flat (a) on the oil chamber side.

4. Piston ring according to claims 1 to 3, characterised in that the radial breadth of the flats (a, b) is made smaller than half the radial wall thickness of the piston ring (1, 9).

5. Piston ring according to claims 1 to 5, characterised in that the radial extent of the flats (a, b) lies between 0.1 and 1 mm.

6. Piston ring according to claims 1 to 5, characterised in that the running surface (10) of the piston ring (9), commencing from the radially outer flat (a), tapers in tapered ring manner.

7. Piston ring according to claims 1 to 6, characterised in that the inner peripheral surface (11) of the piston ring (9) commencing from the radially inner flat (b), extends parallel to the piston axis.

8. Piston ring according to claims 1 to 7, characterised in that the surface regions (7, 8) commencing from the respective flat (a or b) extending at an angle in the direction of the respective oppositely lying peripheral surface (10 or 11) of the piston ring (9) run substantially parallel to one another.

9. Piston ring according to claims 1 to 8, characterised in that the angle lies in the region between 1 and 10°.

10. Method of producing a piston ring with a dished spring form cross section in particular in the installed state, according to claims 1 to 9, characterised in that a piston ring rectangular in the initial state is brought into dished spring formed shape in particular by thermal stressing and the diagonally opposite corner regions of the piston ring, forming flats are post worked.

11. Method of producing a piston ring with a dished spring form cross section in the installed state, according to claims 1 to 9, characterised in that the flanks of a piston ring of rectangular cross section are so worked that diagonally opposite flats remain.

12. Method according to claim 11, characterised in that the flank facing the combustion chamber is worked at an angle commencing from the running surface, and the flank facing the oil chamber commencing from the inner peripheral surface.

13. Method according to claims 10 to 12, characterised in that the worked flanks are ground.

**Revendications**

1. Segment de piston qui, en particulier à l'état monté, présente une section en forme de ressort à disque et qui, soumis à une tension axiale, s'applique au niveau de ses flancs (7, 8) contre les parois latérales situées en vis-à-vis (5, 6) d'une rainure de segment d'un piston, caractérisé en ce que les zones des flancs du segment (1, 9) appliquées contre les parois latérales (5, 6) de la rainure de segment sont munies d'aplatissements (a, b) s'étendant parallèlement ou sensiblement parallèlement aux parois latérales (5, 6) de la rainure de segment (4).

2. Segment de piston selon la revendication 1, caractérisé en ce que la hauteur axiale du segment de piston (9), mesurée dans la zone des aplatissements (a, b) à l'état non monté, est plus importante que la hauteur axiale de la rainure de segment (4) correspondante.

3. Segment de piston selon les revendications 1 et 2, caractérisé en ce que l'aplatissement intérieur (b) est disposé du côté de la chambre de combustion et l'aplatissement extérieur radial (a) est situé du côté du carter d'huile.

4. Segment de piston selon les revendications 1 à 3, caractérisé en ce que la largeur radiale des aplatissements (a, b) est conformée de façon à être plus petite que la moitié de l'épaisseur de la paroi radiale du segment de piston (1, 9).

5. Segment de piston selon les revendications 1 à 4, caractérisé en ce que la saillie radiale des aplatissements (a, b) est comprise entre 0,1 et 1 mm.

6. Segment de piston selon les revendications 1 à 5, caractérisé en ce que la surface de frottement (10) du segment de piston (9), diminue avec une faible conicité à partir de l'aplatissement (a) extérieur radial.

7. Segment de piston selon les revendications 1 à 6, caractérisé en ce que la surface périphérique intérieure (11) du segment de piston (9) s'étend parallèlement à l'axe du piston à partir de l'aplatissement radial intérieur (b).

8. Segment de piston selon les revendications 1 à 7, caractérisé en ce que les zones de surface (7, 8) s'étendant en formant un angle à partir de chacun des aplatissements (a ou b) dans la direction de chacune des surfaces périphériques situées en vis-à-vis (10 ou 11) du segment de piston (9) s'étendent sensiblement parallèlement l'une à l'autre.

9. Segment de piston selon les revendications 1 à 8, caractérisé en ce que l'angle est compris entre 1 et 10°.

10. Procédé de fabrication d'un segment de piston ayant à l'état monté une section en forme de ressort à disque selon les revendications 1 à 9, caractérisé en ce qu'un segment de piston ayant une section rectangulaire à l'état initial est mise sous forme d'un ressort à disque par contrainte thermique et en ce que les zones angulaires du segment de piston situées en vis-à-vis sur une diagonale, formant des aplatissements, sont retravaillées.

11. Procédé pour la fabrication de segments de piston présentant, à l'état monté, une section de ressort à disque selon les revendications 1 à 9, caractérisé en ce que les flancs d'un segment de piston ayant une section rectangulaire sont retravaillés de façon qu'il en résulte des aplatissements situés en vis-à-vis sur une diagonale.

12. Procédé selon la revendication 11, caractérisé en ce que le flanc orienté vers la chambre de combustion, à partir de la surface de frottement, et le flanc orienté vers le carter d'huile, à partir de la surface périphérique intérieure, sont retravaillés pour former un angle.

13. Procédé selon les revendications 10 à 12, caractérisé en ce que les flanc à usiner sont meulés.

FIG. 1

FIG. 2